**Europäisches Patentamt**

**European Patent Office**

**Office européen des brevets**

(19)

(11) Numéro de publication : **0 307 320 B1**

(12)

# FASCICULE DE BREVET EUROPEEN

(45) Date de publication du fascicule du brevet :
**08.04.92 Bulletin 92/15**

(51) Int. Cl.⁵ : **G21C 3/32, G21C 3/12**

(21) Numéro de dépôt : **88402278.1**

(22) Date de dépôt : **09.09.88**

(54) **Assemblage combustible nucléaire à fractionnement de débit.**

(30) Priorité : **11.09.87 FR 8712623**

(43) Date de publication de la demande :
**15.03.89 Bulletin 89/11**

(45) Mention de la délivrance du brevet :
**08.04.92 Bulletin 92/15**

(84) Etats contractants désignés :
**BE DE ES GB SE**

(56) Documents cités :
**EP-A- 0 079 828**
**EP-A- 0 214 895**
**FR-A- 2 399 715**

(73) Titulaire : **FRAMATOME**
**Tour Fiat 1, Place de la Coupole**
**F-92400 Courbevoie (FR)**
Titulaire : **COMPAGNIE GENERALE DES**
**MATIERES NUCLEAIRES (COGEMA)**
**2, rue Paul Dautier B.P. 4**
**F-78141 Vélizy-Villacoublay (FR)**

(72) Inventeur : **Canat, Jean-Noel**
**67 Rue des Aqueducs**
**F-69005 Lyon (FR)**
Inventeur : **Pla, Joel**
**17, Bis, rue Francis Chirat**
**F-67100 Villeurbanne (FR)**

(74) Mandataire : **Fort, Jacques**
**CABINET PLASSERAUD 84, rue d'Amsterdam**
**F-75009 Paris (FR)**

EP 0 307 320 B1

# Description

L'invention concerne les assemblages combustibles pour réacteur nucléaire refroidi et modéré par circulation ascendante de réfrigérant et elle trouve une application particulièrement importante, bien que non exclusive, dans les réacteurs refroidis et modérés à l'eau légère.

Un coeur de réacteur nucléaire est couramment constitué d'assemblages, de section hexagonale ou carrée, portés par une plaque support de coeur.

Les assemblages combustibles actuellement utilisés sont généralement du type comprenant un faisceau de crayons de combustible (ce terme désignant les crayons chargés en matière fissile et/ou en matière fertile) et une structure de maintien du faisceau comportant des embouts, ou pièces d'extrémité, supérieur et inférieur reliés par des tubes guides portant des grilles de maintien des crayons combustibles aux noeuds d'un réseau régulier, des moyens élastiques de transmission d'effort hydraulique sont généralement prévus.

L'embout supérieur assure de multiples fonctions mécaniques et hydrauliques. Il permet de manipuler l'assemblage. Il coopère avec une plaque supérieure de coeur qui délimite ce dernier pour fixer la position horizontale de l'assemblage. L'embout supérieur est également percé d'ouvertures livrant passage à des éléments allongés destinés à être insérés dans des tubes-guides et constituant des grappes, ces grappes étant placées à demeure (cas des grappes de bouchons ou de sources) ou déplaçables au cours du fonctionnement (cas des grappes absorbantes ou de variation de spectre). Enfin la quasi totalité du débit ascendant qui parcourt l'assemblage entre les crayons de combustible et éventuellement dans les tubes guides est collectée par l'embout supérieur.

Au-dessus des assemblages est placée la plaque supérieure de coeur qui possède des ouvertures d'évacuation du réfrigérant. Cette plaque supérieure définit, avec des fourreaux de guidage de grappes et des colonnes entretoises reliées à une plaque supplémentaire, des équipements internes supérieurs du réacteur.

Dans les réacteurs actuels refroidis et modérés à l'eau légère, les ouvertures de sortie de réfrigérant ménagées dans l'embout supérieur sont disposées de façon que la quasi-totalité du débit sortant d'un assemblage muni d'une grappe est dirigée vers le fourreau de guidage de la grappe. Des exemples de réalisation de ce genre sont décrits dans le document FR-A-2 399 715 (WESTINGHOUSE), correspondant au brevet US 4 231 843, et dans le document EP-A-0 079 828 (FRAMATOME et Cie), auxquels on pourra se reporter.

Dans certains cas, cette disposition fait passer dans les fourreaux de guidage de grappes un débit trop important ou à vitesse excessive, ce qui se traduit par des vibrations intenses des crayons des grappes.

La présente invention vise à fournir un assemblage combustible du type ci-dessus défini répondant mieux que ceux antérieurement connus aux exigences de la pratique, notamment en ce qu'il permet de régler le débit traversant les fourreaux de guidage de grappe.

Dans ce but, l'invention propose notamment un assemblage caractérisé en ce que la plaque adaptatrice ménage des passages de réfrigérant autour de la virole.

Cette disposition permet de diriger une fraction ajustable du débit de réfrigérant vers l'extérieur du fourreau de guidage de grappes associé à l'assemblage. A la limite, la plaque adaptatrice peut être dépourvue d'ouvertures débouchant dans le volume interne et, dans ce cas, le fourreau de guidage ne reçoit que le réfrigérant qui a parcouru l'intérieur des tubes guides. Lorsque des ouvertures débouchant dans le volume interne sont ménagées dans la plaque adaptatrice, ces ouvertures sont disposées de façon qu'elles ne puissent livrer passage à un ou des crayons combustible.

Le réfrigérant qui sort par les passages ménagés autour de la virole passe dans les internes supérieurs à travers des ouvertures ménagées entre les fourreaux.

L'invention est applicable aussi bien aux assemblages combustibles dont la structure ou le squelette de maintien est d'une seule pièce et est plaquée contre la plaque supérieure de coeur ou contre une plaque support de coeur par des moyens élastiques qu'à ceux dans lesquels la structure est constituée de deux sous-structures capables de se déplacer verticalement l'une par rapport à l'autre. De tels assemblages à deux sous-structure sont décrits notamment dans les demandes de brevet EP-A-214 895 (FR-A-2 589 614) et FR-A-2 618 248 auxquelles on pourra se reporter.

L'invention sera mieux comprise à la lecture de la description qui suit de modes particuliers de réalisation de l'invention, donnés à titre d'exemples non limitatifs. La description se réfère aux dessins qui l'accompagnent, dans lesquels :

– la **figure 1** est un schéma montrant les éléments principaux de la structure d'un assemblage selon un premier mode de réalisation de l'invention, comportant deux sous-structures, et les plaques de coeur avec lesquelles il coopère,

– les **figures 2 et 3** montrent schématiquement, en coupe suivant un plan vertical médian et en vue de dessus, un embout supérieur constituant une variante de celui montré en figure 1,

– la **figure 4**, similaire à la figure 2, montre l'embout supérieur d'un assemblage à deux sous-structures dont la plaque adaptatrice est percée d'ouvertures de passage de réfrigérant vers le fourreau de guidage,

– les **figures 5 et 6** montrent, respectivement en coupe suivant un plan vertical et en vue de dessus, une constitution possible d'embout supérieur d'assemblage correspondant au schéma de la figure 1.

– les **figures 7 et 8** montrent schématiquement, en coupe suivant un plan passant par l'axe, l'embout supérieur d'un assemblage combustible monostructure plaquée contre la plaque supérieure de coeur, suivant deux variantes de réalisation,

– la **figure 9**, similaire aux figures 2 et 3, montre l'embout supérieur d'un assemblage dont la monostructure est plaquée élastiquement contre la plaque support de coeur, conformément à un autre mode encore de réalisation de l'invention,

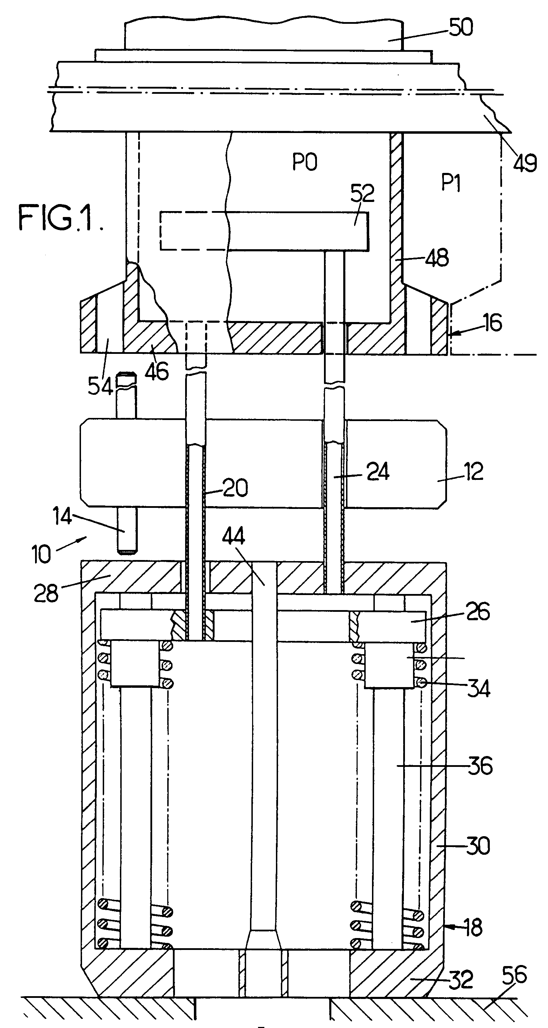

L'assemblage 10 montré schématiquement en figure 1 comporte une structure support ayant un embout supérieur 16, un embout inférieur 18 et des tubes-guides assurant le maintien des autres éléments constitutifs de la structure, portant des grilles 12 de supportage et d'entretoisement de crayons 14, dont un seul est représenté.

La structure est fractionnée en deux sous-structures. La première sous-structure comprend l'embout supérieur 16 et les tubes-guides 20 appartenant à un premier groupe, solidarisés de façon permanente des grilles 12 et de l'embout supérieur 16. La seconde sous-structure comprend le reste des tubes-guides 24, constituant un second groupe, qui coulissent dans l'embout supérieur 16 et dans les grilles 12, et qui sont fixés à l'embout inférieur 18.

L'embout inférieur 18 constitue une cage, représentée d'une seule pièce sur la figure 1, mais en fait réalisée par assemblage de plusieurs composants, ayant un fond 28 fixé rigidement aux tubes-guides 24 et une paroi latérale 30 reliant le fond 28 à un cadre 32 ménageant un large passage d'entrée de réfrigérant dans la cage. Dans l'embout inférieur 18 est montée une plaque mobile 26 fixée aux tubes-guides 20 et appartenant donc à la première sous-structure.

Des moyens élastiques emprisonnés dans la cage 30, donc protégés par elle, comportent des ressorts hélicoïdaux interposés entre le cadre 32 et la plaque mobile 26. Dans le cas d'un assemblage à réseau triangulaire, dont les embouts ont une section hexagonale, six ressorts 34 sont avantageusement prévus, chacun dans un des angles de la paroi latérale 30. Chaque ressort 34 est monté sur un axe de guidage 36 qui relie le fond 28 au cadre 32. Dans le mode de réalisation montré en figure 1, le cadre 32 et le fond 38 sont également reliés par un tube prolongateur 44 situé dans le prolongement d'un tube d'instrumentation non représenté.

L'embout supérieur 16 comprend une plaque adaptatrice 46 fixée aux tubes-guides 20 et une virole 48, dirigée vers le haut et destinée à prendre appui sur la plaque supérieure de coeur 49 autour d'un passage (non représenté) d'admission du réfrigérant dans le fourreau 50. La plaque 46 est d'une seule pièce avec la virole 48 ou fixée rigidement à elle. Pour plus de simplicité, un seul tube guide 20 et un seul tube-guide 24 ont été représentés sur la figure 1. Dans la réalité, plusieurs tubes-guides de chaque type sont répartis dans le réseau des crayons 14. La virole 48 entoure la totalité des tubes-guides 20 et 24 de façon qu'ils débouchent tous dans le volume interne à la virole. Les extrémités de tous les tubes-guides 24 sont fixées à un plateau de solidarisation 52 qu'ils traversent et qui peut se déplacer le long de l'embout supérieur 16.

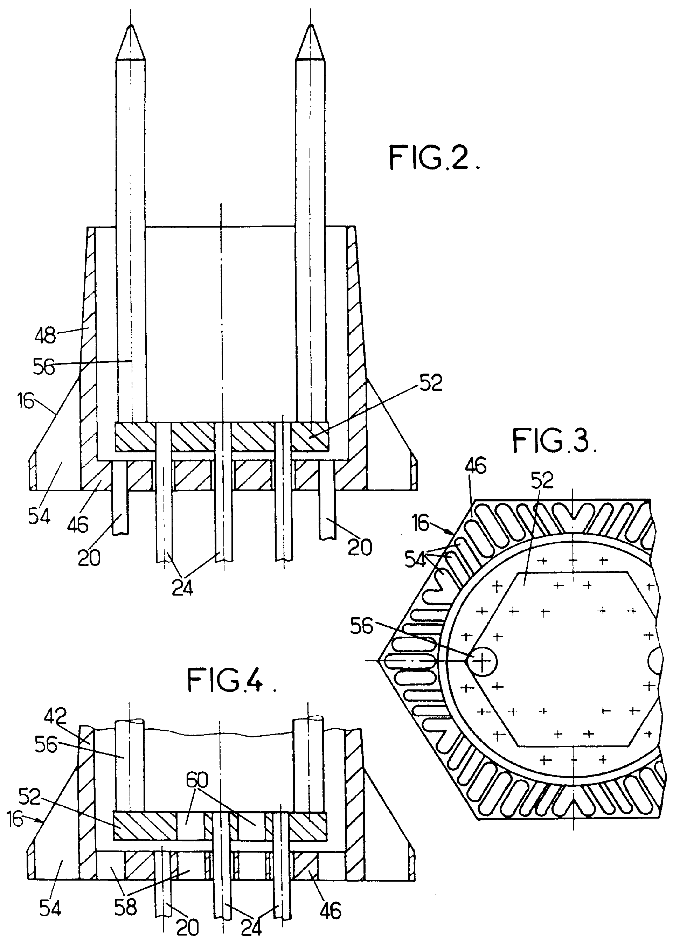

Dans le mode de réalisation montré en figures 1 et 2, aucune ouverture débouchant dans le volume intérieur n'est ménagée dans la plaque adaptatrice 46. En conséquence, seul le débit ascendant de réfrigérant ayant traversé les tubes-guides 20 et 24 débouche dans le volume intérieur et passe de là dans le fourreau 50 par l'ouverture ménagée dans la plaque supérieure de coeur 49. Par contre, des ouvertures 54 sont ménagées dans la plaque 46 autour de la virole 48 et débouchent dans l'espace situé entre embouts supérieurs d'assemblages adjacents.

Cette disposition permet de découpler la pression P1 qui règne à l'extérieur des viroles 48 de la pression P0 qui règne dans le volume intérieur. En effet, lorsque l'assemblage est en place dans un coeur de réacteur et repose sur la plaque support de coeur 56, la plaque mobile 26 poussée vers le haut par les ressorts 34 entraîne l'ensemble de la première sous-structure et les crayons de combustible 14 jusqu'à une position où la virole 48 est en appui contre la plaque supérieure de coeur 49.

Il faut remarquer que le plateau 52 reçoit l'araignée de la grappe associée à l'assemblage en cas de chute et ne transmet pas l'effort d'impact à la plaque adaptatrice 46. On évite ainsi de repousser l'embout supérieur 16 hors de contact avec la plaque 49 et de perdre l'étanchéité entre virole 48 et plaque 49 lors des transitoires.

Il faut également remarquer que la constitution montrée en figure 1 met en communication le volume interne à la virole 48 avec le volume d'eau froide existant sous le couvercle de la cuve du réacteur. Ainsi, en cas de dépressurisation du coeur, la pression P0 devient supérieure à la pression P1, qui est également celle qui règne dans la partie supérieure des assemblages, et exerce une force qui repousse la première sous-structure et provoque le déversement d'eau relativement froide sur les assemblages.

Dans le mode de réalisation montré en figures 2 et 3 (où les organes correspondant à ceux de la figure 1 sont désignés par le même numéro de référence) les tubes-guides 20 de la première sous-structure sont disposés autour des tubes-guides 24, ce qui permet de réduire la dimension transversale du plateau 52. Ce plateau est muni de pions de centrage 56 destinés à s'engager dans des trous correspondants (non représentés) de la plaque supérieure de coeur.

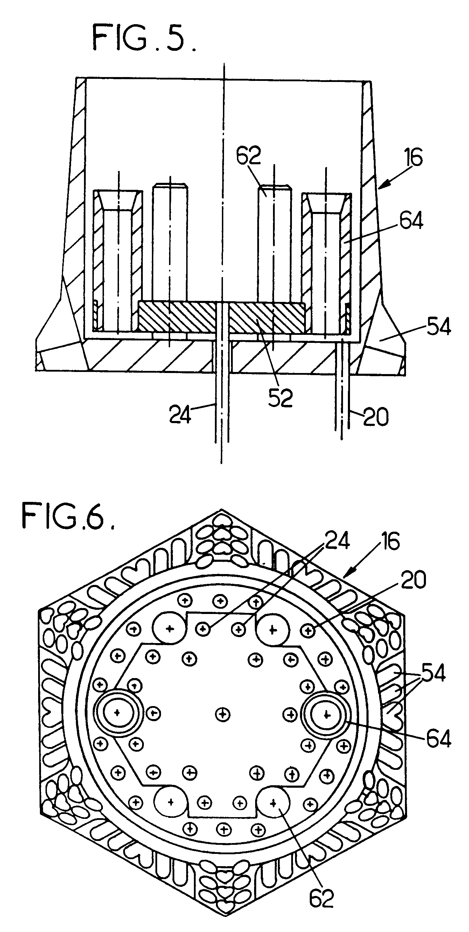

Dans la variante montrée en figure 4, des ouvertures de passage 58 débouchant dans le volume intérieur sont ménagées à travers la plaque adaptatrice 46. Des ouvertures correspondantes 60 sont ménagées dans le plateau 52. La répartition du débit de réfrigérant entre le fourreau de guidage et l'extérieur est fixée à volonté par ajustage des sections de passage offertes par les ouvertures 54 et 58.

La variante de réalisation montrée en figures 5 et 6 (où les mêmes numéros de référence sont encore utilisés pour désigner les éléments déjà décrits), se différencie des précédentes par la présence de tiges 62 de guidage coulissant du plateau 52 et par le fait que ce dernier est muni de manchons de guidage 64. Les manchons permettent l'engagement des pions de centrage qui, dans le cas de cette variante, sont implantés sous la plaque supérieure du coeur. Les ouvertures 54 sont placées obliquement, ce qui permet d'augmenter leur section droite. Le volume interne de l'embout n'est encore alimenté que par les tubes-guides 20 et 24.

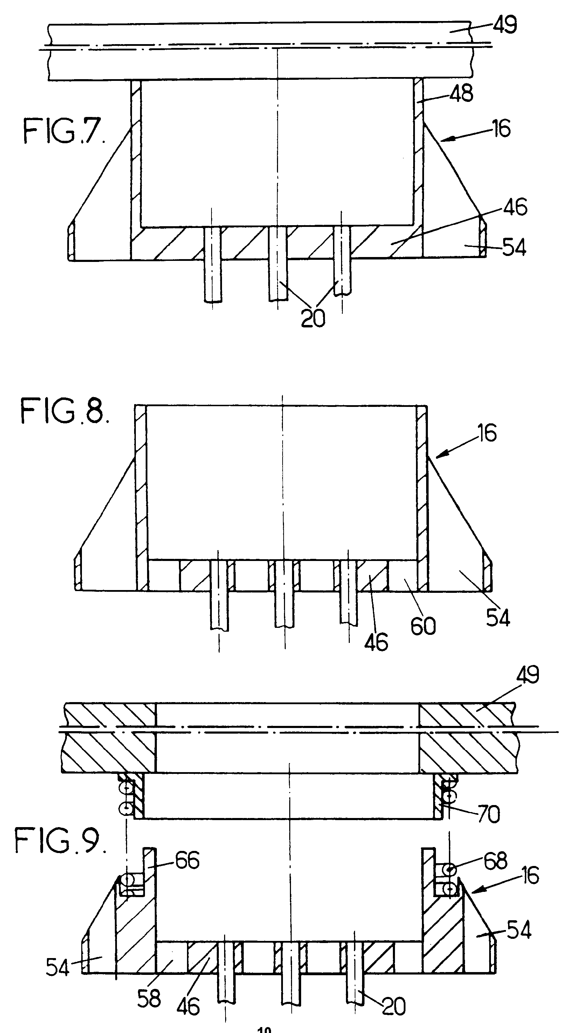

L'invention est également applicable à des assemblages combustible à structure monobloc. La figure 7 montre l'embout supérieur d'un tel assemblage, prévu pour être plaqué contre la plaque supérieure de coeur 49 par des ressorts (non représentés) portés par l'embout inférieur et s'appuyant sur la plaque support de coeur. Ces ressorts peuvent être montés de façon en elle-même connue. Le volume interne de l'embout supérieur n'est encore alimenté que par les tubes-guides 20. Tous les tubes-guides sont fixés à la plaque adaptatrice 46 et à l'embout inférieur.

La variante de réalisation montrée en figure 8 ne se différencie de celle de la figure 7 que par la présence d'ouvertures 60 ménagées dans la plaque adaptatrice 46 pour laisser passer un faible débit de réfrigérant vers le volume intérieur de l'embout 16 et, de là, vers le fourreau de guidage correspondant.

Alors que dans le cas des figures 7 et 8 aucune redistribution de l'écoulement ne peut s'effectuer en aval de la plaque adaptatrice, il n'en est pas de même dans le cas où l'assemblage est à structure monobloc maintenue appuyée contre la plaque support de coeur par des moyens élastiques incorporés à l'embout supérieur. Dans le cas montré en figure 9, l'embout supérieur 16 comporte une virole 66 plus courte que la virole 48 des modes de réalisation précédents. Un ressort hélicoïdal 68 est interposé entre l'embout 16 et une couronne 70 d'appui contre la plaque supérieure de coeur 49. Ce ressort remplit la fonction dite d'anti-envol.

Une première distribution du débit de réfrigérant ayant parcouru l'assemblage est réalisée par les ouvertures 54 et 58 dans la plaque adaptatrice 46, dès l'amont de l'embout. Une redistribution s'effectue dans l'espace qui subsiste entre la virole 68 et la couronne 70. Cette disposition présente, par rapport aux précédentes, l'inconvénient que l'allongement éventuel des assemblages sous irradiation est susceptible de modifier la répartition de débit initialement prévue.

L'invention est susceptible de nombreuses autres variantes encore de réalisation. De façon générale elle s'applique aussi bien aux structures monobloc qu'aux structures en plusieurs sous-structures et aussi bien aux assemblages à section carrée qu'aux assemblages à section hexagonale.

## Revendications

1. Assemblage combustible pour réacteur nucléaire comprenant un faisceau de crayons de combustible et une structure de maintien du faisceau comportant des embouts supérieur (16) et inférieur (18) reliés par des tubes-guides (20,24) portant des grilles (12) de maintien des crayons de combustible au noeud d'un réseau régulier, l'embout supérieur (16) comprenant une plaque adaptatrice (46) fixée à certains au moins des tubes-guides (20) et munie d'une virole (48) dirigée vers le haut, destiné à prendre appui directement ou indirectement sur la plaque supérieure de coeur (49), autour d'un passage de réfrigérant, et délimitant un volume interne dans lequel débouchent tous les tubes-guides (20,24), caractérisé en ce que la plaque adaptatrice (46) ménage des passages de réfrigérant (54) autour de la virole (48).

2. Assemblage selon la revendication 1, caractérisé en ce que la plaque adaptatrice est démunie d'ouverture de passage débouchant dans ledit volume.

3. Assemblage selon la revendication 1 ou 2, caractérisé en ce que ledit passage de réfrigérant ménagé dans la plaque supérieure de coeur (49) débouche dans un fourreau (50) de guidage de grappe.

4. Assemblage selon la revendication 1, 2 ou 3 caractérisé en ce que la structure de l'assemblage comprend deux sous-structures dont l'une comporte l'embout supérieur, certains des tubes-guides (20), une plaque (26) mobile dans l'embout inférieur (18) et les grilles (12) de maintien des crayons (14) et dont l'autre comporte le reste des tubes-guides (24) et l'embout inférieur (18), des moyens élastiques étant prévus dans l'embout inférieur pour exercer sur ce dernier et sur la plaque mobile (26) une force tendant à écarter les embouts et à appliquer la virole (48) directement contre la plaque supérieure de coeur (49).

5. Assemblage selon la revendication 4, caractérisé en ce que les tubes-guides (24) de la seconde sous-structure sont fixés à un plateau (52) mobile dans l'embout supérieur et prévu pour recevoir éventuellement l'araignée d'une grappe en cas de chute de cette dernière.

6. Assemblage selon la revendication 5, caractérisé en ce que le plateau (52) est muni de pions (56) de centrage dans la plaque supérieure de coeur (49).

7. Assemblage selon la revendication 5 ou 6, caractérisé en ce que la plaque adaptatrice (46) de l'embout supérieur (16) est percée d'ouvertures supplémentaires (58) débouchant dans le volume intérieur de l'embout et en ce que le plateau (52) est percé d'ouvertures (60) correspondant aux ouvertures supplémentaires de la plaque adaptatrice.

8. Assemblage selon l'une quelconque des revendications 4 à 7, caractérisé en ce que les tubes-guides (20) de la première sous-structure sont disposés autour des tubes-guides (24) de la seconde sous-structure.

9. Assemblage selon la revendication 1, 2 ou 3, caractérisé en ce que la structure est monobloc et en ce qu'elle est équipée de moyens élastiques destinés à plaquer directement la virole (48) de l'embout supérieur contre la plaque supérieure de coeur (49).

10. Assemblage selon la revendication 1, 2 ou 3, caractérisé en ce que la structure est monobloc et en ce que la virole (48) de l'embout supérieur prend appui sur la plaque supérieure de coeur par l'intermédiaire de moyens élastiques anti-envol (68) et d'une couronne d'appui (70).

**Patentansprüche**

1. Brennelementkassette für einen Kernreaktor mit einem Bündel Brennstäbe und einer Haltestruktur des Brennstabbündels bestehend aus oberen (16) und unteren (18) Endstücken, die durch Führungsrohre (20, 24) miteinander verbunden sind, die wiederum Halterungsgitter (12) der Brennstäbe an den Kreuzungspunkten eines gleichmäßigen Gitters aufweisen, wobei das obere Endstück (16) eine Adapterplatte (46) aufweist. die mindestens an einigen der Führungsrohre (20) befestigt ist und mit einem sich nach oben erstreckenden Ring (48) versehen ist, der direkt oder indirekt auf der oberen Platte des Reaktorkerns (49) um eine Kühlmittelpassage herum aufliegen soll und ein Innenvolumen begrenzt, in dem alle Führungsrohre (20, 24) münden, dadurch **gekennzeichnet** , daß die Adapterplatte (46) Durchgänge (54) für das Kühlmittel um den Ring (48) herum bildet.

2. Kassette nach Anspruch 1, dadurch gekennzeichnet, daß die Adapterplatte keine Durchgangsöffnungen, die in dem Innenraum münden, aufweist.

3. Brennelementkassette nach Anspruch 1 oder 2, dadurch gekennzeichnet, daß der Kühlmitteldurchgang, der in der oberen Platte des Reaktorkerns (49) angeordnet ist, in einer Steuerbündelhülse (50) mündet.

4. Brennelementkassette nach Anspruch 1, 2 oder 3, dadurch gekennzeichnet, daß das Gerüst der Kassette zwei Untergerüste aufweist, von denen einer das obere Endstück, einige Führungsrohre (20) eine bewegliche Platte (26) im unteren Endstück (18) und die Haltegitter (12) der Brennstäbe (14) aufweist, und wobei das andere Untergerüst die übrigen Führungsrohre (24) und das untere Endstück (18) aufweist, wobei elastische Organe im unteren Endstück angeordnet sind, um auf letzteres und auf die bewegliche Platte (26) eine Kraft auszuüben, die die Endstücke auseinanderdrückt und die den Ring (48) direkt gegen die obere Platte des Reaktorkerns (49) drückt.

5. Brennelementkassette nach Anspruch 4, dadurch gekennzeichnet, daß die Führungsrohre (24) des zweiten Untergerüstes in einer beweglichen Platte (52) im oberen Endstück befestigt sind und dazu vorgesehen sind, ggfs. die Spinne eines Brennstabbündels, falls dieses herabfallen sollte, aufzunehmen.

6. Brennelementkassette nach Anspruch 5, dadurch gekennzeichnet, daß die Platte (52) mit Zentrierstäben (56) in der oberen Platte des Kerns (49) versehen ist.

7. Brennelementkassette nach Anspruch 5 oder 6, dadurch gekennzeichnet, daß die Adapterplatte (46) des oberen Endstücks (16) mit zusätzlichen Öffnungen (58) durchbohrt ist, die in dem Innenraum des Endstücks münden und dadurch, daß die Platte (52) mit Öffnungen (60) durchbohrt ist, die den zusätzlichen Öffnungen der Adapterplatte entsprechen.

8. Brennelementkassette nach einem der Ansprüche 4 bis 7, dadurch gekennzeichnet, daß die Führungsrohre (20) des ersten Untergerüstes um die Führungsrohre (24) des zweiten Untergerüstes herum angeordnet sind.

9. Brennelementkassette nach Anspruch 1, 2 oder 3, dadurch gekennzeichnet, daß das Gerüst einstückig ist und dadurch, daß dieses mit elastischen Organen ausgerüstet ist, die dazu bestimmt sind, den Ring (48) des oberen Endstückes gegen die obere Platte des Reaktorkerns (49) zu drücken.

10. Brennelementkassette nach einem der Ansprüche 1, 2 oder 3, dadurch gekennzeichnet, daß das Gerüst einstückig ist und dadurch, daß der Ring (48) des oberen Endstücks auf der oberen Platte des Reaktorkerns über elastische Halterungsorgane (68) und eine Andruckkrone (70) anliegt.

**Claims**

1. Fuel assembly for nuclear reactor, comprising a bundle of fuel rods and a structure for maintaining the bundle having upper (16) and lower (18) end pieces connected by guide tubes (20,24) carrying grids (12) for maintaining the fuel rods at the nodes of a regular lattice, the upper end piece (16) comprising an adapter plate (46) secured to at least some of the guide tubes (20) and provided with an upwardly extending shroud (48) intended to directly or indirectly abut the upper core plate (49) around a coolant passage, and defining an inner volume into which all guide tubes (20,24) open, characterized in that the adapter plate (46) has coolant passages (54) around the shroud (48).

2. Fuel assembly according to claim 1, characterized in that the adapter plate is devoid of flow passages opening into said volume.

3. Assembly according to claim 1 or 2, characterized in that said coolant passage formed in the upper core plate (49) opens into a cluster guiding sleeve (50).

4. Assembly according to claim 1, 2 or 3, characterized in that the assembly structure comprises two sub-structures one of which includes the upper end piece, some of the guide tubes (20), a plate (26) which is movable within the lower end piece (18) and the grids for maintaining the rods (14) and the other of which comprises the balance of the guide tubes (24) and the lower end piece (18), resilient means being provided in the lower end piece for applying on the latter and on the movable plate (26) a force which tends to spread the end pieces apart and to apply the shroud (48) directly against the upper core plate (49).

5. Assembly according to claim 4, characterized in that the guide tubes (24) of the second sub-structure are fixed to a plate (52) which is movable within the upper end piece and which is arranged for possibly receiving the spider of a cluster upon fall of the latter.

6. Assembly according to claim 5, characterized in that the plate (52) is provided with studs (56) for centering in the upper core plate (49).

7. Assembly according to claim 5 or 6, characterized in that the adapter plate (46) of the upper end piece (16) is formed with additional passages (58) opening into the inner volume of the end piece and in that the plate (52) is formed with passages (60) mating with the additional passages of the adapter plate.

8. Assembly according to any one of claims 4-7, characterized in that the guide tubes (20) of the first sub-structure are located around the guide tubes (24) of the second sub-structure.

9. Assembly according to claim 1, 2 or 3, characterized in that the structure is unitary and in that it is provided with resilient means for applying the shroud (48) of the upper end piece directly against the upper core plate (49).

10. Assembly according to claim 1, 2 or 3, characterized in that the structure is unitary and in that the shroud (48) of the upper end piece abuts the upper core plate through resilient hold-down means (68) and a bearing ring (70).

FIG.1.

FIG.2.

FIG.3.

FIG.4.

# FIG.5.

# FIG.6.

EP 0 307 320 B1

FIG.7.

FIG.8.

FIG.9.

49
48
16
46
54
20

16
54
60
46

49
70
66
68
16
54
54
58
46
20

10